Europäisches Patentamt

European Patent Office

Office européen des brevets

(11) Veröffentlichungsnummer: **0 416 385 A2**

# EUROPÄISCHE PATENTANMELDUNG

(21) Anmeldenummer: 90116211.5

(22) Anmeldetag: 24.08.90

(51) Int. Cl.5: **G11B 5/70, G11B 5/84**

(30) Priorität: 02.09.89 DE 3929166

(43) Veröffentlichungstag der Anmeldung:
13.03.91 Patentblatt 91/11

(84) Benannte Vertragsstaaten:
**DE FR GB NL**

(71) Anmelder: **BASF Aktiengesellschaft**
**Carl-Bosch-Strasse 38**
**W-6700 Ludwigshafen(DE)**

(72) Erfinder: **Kreitner, Ludwig, Dr.**
**Liebigstrasse 10**
**W-6148 Heppenheim(DE)**
Erfinder: **Grau, Werner, Dr.**
**Tuchleiche 5**
**W-6712 Bobenheim-Roxheim(DE)**
Erfinder: **Lehner, August**
**Wachenheimer Strasse 4**
**W-6701 Roedersheim-Gronau(DE)**
Erfinder: **Reichert, Hans, Dr.**
**Gaisbacher Strasse 17**
**W-7602 Oberkirch(DE)**
Erfinder: **Sommermann, Friedrich, Dr.**
**Grimmelshausenstrasse 9**
**W-7640 Kehl(DE)**
Erfinder: **Schneider, Norbert**
**Madenburgstrasse 5t**
**W-6701 Altrip(DE)**
Erfinder: **Erhardt, Gerd**
**Adelsbuehnstrasse 1**
**W-7640 Kehl(DE)**

(54) **Verfahren zur Herstellung magnetischer Aufzeichnungsträger.**

(57) Die Erfindung betrifft ein Verfahren zur Herstellung von magnetischen Aufzeichnungsträgern durch Herstellen einer Dispersion anisotroper magnetischer Materialien in der Lösung eines organischen Bindemittels unter Verwendung von Dispergierhilfsmitteln und weiteren üblichen Zusatzstoffen, schichtförmiges Auftragen der Dispersion auf ein nichtmagnetisches Trägermaterial und Verfestigen der aufgebrachten Magnetschicht, wobei ein zylinderförmiger, mit einem anker- oder wendelförmigen Rührer versehener Mahlbehälter eingesetzt wird, der mit Mahlkörpern gefüllt ist, deren spezifisches Gewicht kleiner als das des magnetischen Materials ist.

# VERFAHREN ZUR HERSTELLUNG MAGNETISCHER AUFZEICHNUNGSTRÄGER

Die Erfindung betrifft ein verfahren zur Herstellung von magnetischen Aufzeichnungsträgern durch Herstellen einer Dispersion anisotroper magnetischer Materialien in der Lösung eines organischen Bindemittels unter Verwendung von Dispergierhilfsmitteln und weiteren üblichen Zusatzstoffen, schichtförmiges Auftragen der Dispersion auf ein nicht-magnetisches Trägermaterial und Verfestigen der aufgebrachten Magnetschicht.

Magnetische Aufzeichnungsträger sind zur Aufnahme und Wiedergabe von Ton, Bild und Daten in Anwendung. Die ständig steigenden Anforderungen, welche an die Aufzeichnungsträger gestellt werden, machen weitere Verbesserungen der magnetischen und elektroakustischen Eigenschaften nötig. So erfordert die Entwicklung in Richtung höherer Aufzeichnungsdichten bei allen genannten Anwendungsformen die Herstellung immer dünnerer Magnetschichten. Aus diesem Grunde muß sowohl die Packungsdichte des magnetischen Materials in der Magnetschicht, die remanente Magnetisierung in Aufzeichnungsrichtung, die gleichmäßige Verteilung des magnetischen Materials in der Schicht, sowie die Oberflächenglätte und die Gleichmäßigkeit der Schicht in hohem Maße verbessert werden. Die Frequenzanteile, z.B. eines Schallereignisses an der oberen Grenze der Hörbarkeit, sind für die Erkennbarkeit besonders wichtig. Eine Magnetschicht muß daher diese hohen aber auch die tiefen Frequenzen amplitudengetreu speichern und wiedergeben können.

Die Herstellung von pulverförmigem magnetischem Material enthaltenden Dispersionen im Rahmen der Produktion von magnetischen Aufzeichnungsträgern ist bekannt. Diese Dispersionen bestehen aus einem pulverförmigen magnetischen Material, einem Lösungsmittel oder -gemisch, mindestens einem in diesem Lösungsmittel(gemisch) löslichen oder dispergierbaren organischen Polymeren oder Präpolymeren, Dispergierhilfsmitteln und weiteren organischen und/oder anorganischen Zusatzstoffen, wie Gleitmittel, Viskositätsregulatoren, Stabilisatoren, inerte anorganische Substanzen zur Regulierung der Leitfähigkeit, des Abriebs, der Rauhigkeit usw. Die Bereitung der Dispersion aus den angeführten Komponenten geschieht in Dispergiereinrichtungen, im allgemeinen Mühlen genannt, mit deren Hilfe durch das Einwirken eines hohen Schergefälles, die pulverförmigen Materialien weitgehend in ihre Einzelteilchen getrennt und mit dem Bindemittel umhüllt werden. Bedingt durch die Art der Herstellung wie auch durch die sich daran anschließende Aufbereitung der magnetischen Materialien entstehen aus Einzelteilchen aufgebaute Agglomerate mit sehr unterschiedlichem Sekundärteilchendurchmesser. Zur Herstellung hochwertiger magnetischer Aufzeichnungsträger ist es aber erforderlich, daß die meist nadelförmigen, magnetischen Teilchen als weitgehend gleichförmige Einzelteilchen in einer vorgegebenen, der Aufzeichnungsrichtung entsprechenden Vorzugsrichtung und in gleichen Abständen zueinander in der Magnetschicht vorliegen.

Zur Verbesserung der Dispergierung werden sehr unterschiedliche Wege beschrieben, z.B. das Optimieren der Bindemittel, der Dispergierhilfsmittel, der magnetischen Materialien. Sind dann durch eine Optimierung die Bindemittel, Dispergierhilfsmittel, Gleitmittel, Stützstoffe und die Magnetmaterialien festgelegt, so besteht immer noch die Aufgabe mit einer solchen Rezeptur die optimalen Eigenschaften durch eine kostengünstige Dispergierung zu erzielen. Dabei hat sich gezeigt, daß die bisher verwendeten Dispergierverfahren mit entweder sehr langen Dispergierzeiten bei niedriger Viskosität oder sehr hohe Scherkräften bei verkürzter Mahldauer, bei der Aufteilung der Sekundärteilchen in einzelne Nadeln die Magnetnadeln schädigen.

Die bekannten Verfahren, wie sie z.B. in dem deutschen Patent 1 285 277 beschrieben werden, haben eine sehr geringe Raumzeitausbeute, außerdem entstehen Magnetschichten in denen die durch die Magnetmaterialien bedingten Eigenschaften nicht voll zum Tragen kommen, z.B. niedrige Kopierdämpfung und/oder Remanenz. Auch die in der DE-A 3 526 415 beschriebene Maßnahme führt nicht zu Magnetschichten bei denen optimale Magnetwerte und eine optimale Kopierdämpfung entstehen. Weiter von Nachteil ist, daß die hierbei verwendbaren Mahlkörper, wie z.B. Glaskugeln mit einer Dichte von 2 bis 3 $g/cm^3$, zu einem starken Fehleranstieg führen. Von Nachteil ist auch, daß nur feinteilige Magnetpigmente aufgeteilt werden können. Größere Magnetnadeln werden durch die sehr hohe Energiedichte in der Rührwerksmühle teilweise zerstört.

Aufgabe der Erfindung war es demnach, ein Dispergierverfahren zu finden, bei dem bei einer möglichst kurzen Dispergierzeit die magnetischen Materialien sehr schonend in eine homogene stabile Dispersion ohne Beschädigung der Nadelform überführt werden können. Weiterhin war Aufgabe der Erfindung die Verbesserung der magnetischen Werte, wie der Remanenz und der magnetischen Ausrichtung der formanisotropen Teilchen sowie aller elektroakustischen Daten, wie z.B. der Höhen- und Tiefenaussteuerbarkeit.

Es wurde nun gefunden, daß sich die gestellte Aufgabe mit einem Verfahren zur Herstellung von magnetischen Aufzeichnungsträgern durch Herstellen einer Dispersion anisotroper magnetischer Materialien in der Lösung eines organischen Bindemittels unter Verwendung von Dispergierhilfsmitteln und weiteren üblichen Zusatzstoffen, schichtförmiges Auftragen der Dispersion auf ein nichtmagnetisches Trägermaterial und Verfestigen der aufgebrachten Magnetschicht lösen läßt, wenn die Dispersion in einem geschlossenen zylinderförmigen Mahlbehälter mit einem Verhältnis von Länge zu Durchmesser von 1,3 bis 2,5 zu 1, der mit kugelförmigen Mahlkörpern mit einem, bezogen auf das eingesetzte magnetische Material, geringeren spezifischen Gewicht und einem Durchmesser von 0,5 bis 3 mm gefüllt ist, unter Rühren mit einem Anker- oder Wendelrührer bei 50 bis 1000 Umdrehungen pro Minute hergestellt wird.

Besonders vorteilhaft läßt sich das erfindungsgemäße Verfahren durchführen, wenn bei der Dimensionierung des Mahlbehälters ein Verhältnis von Länge zu Durchmesser von 1,5 bis 2,2 zu 1 und insbesondere ein solches von 1,6 bis 2,0 zu 1 eingehalten wird. Die Rührenergie wird in den Mahlbehältern gemäß dem erfindungsgemäßen Verfahren mit dem anker- und insbesondere mit dem wendelförmigen Rührer, insbesondere bei Rührgeschwindigkeiten zwischen 100 und 500 U/min sehr schonend auf das Mahlgut übertragen.

Überraschend war die sich dabei ergebende sehr kurze Mahldauer von 1 bis 10 Stunden pro Behältermahlung und damit die hohe Raum/Zeitausbeute, welche auch einen geringeren Energieverbrauch zur Folge hat. Vorteilhaft ist auch, daß in sehr weiten Viskositätsgrenzen, d.h. auch bei sehr hohen Fließgrenzen, gearbeitet werden kann.

Ein weiterer Vorteil ist, daß der Behälter geflutet, d.h. weitgehend voll, gefahren werden kann. Diese Maßnahme hat zwei Vorteile, nämlich die zusätzliche Verbesserung der Raum/Zeitausbeute und eine Minimierung der Fehler, da sich bei geflutetem Mahlbehälter keine Anbackungen bilden können.

Überraschend war auch, daß nicht nur feinteilige Magnetpigmente sondern auch sehr grobe Teilchen mit einer spezifischen Oberfläche von unter 20 $m^2/g$ sehr schonend aufgeteilt werden können.

Die für das erfindungsgemäße Verfahren geeigneten Mahlkörper haben einen Durchmesser von 0,5 bis 3 mm, insbesondere von 0,7 bis 2 mm. Mahlkörper mit einem kleineren Durchmesser beschleunigen zwar deutlich die Dispergierung, sie lassen sich jedoch nur noch sehr schwer von der fertigen Dispersion abtrennen. Werden dagegen Mahlkörper mit einem größeren Durchmesser eingesetzt, so verlängert sich die Dispergierzeit. Außerdem tritt mit dickeren Kugeln eher eine Beschädigung des zu dispergierenden Materials auf.

Geeignete Mahlkörper weisen eine Dichte auf, die kleiner als die des eingesetzten magnetischen Materials, im allgemeinen kleiner als 5,5 ist und vorzugsweise 1,2 bis 4 $g/cm^3$ und insbesondere 1,2 bis 3,2 $g/cm^3$ beträgt. Dabei spielt die Art des Materials eine untergeordnete Rolle, wichtig ist die Härte und Abriebfestigkeit bzw. Bruchfestigkeit des Materials. Geeignete Materialien sind beispielsweise Keramik und insbesondere aufgrund ihrer Dichte Glas- und Kunststoffmahlkörper. Als Keramikkugeln lassen sich z.B. $SiO_2$ + $Al_2O_3$ mit einer Dichte 3,4 $g/cm^3$ mit der Bezeichnung Stemalox der Firma Steatit Magnesa AG, oder nur aus $Al_2O_3$ (Dichte 3,8 $g/cm^3$) der F. Metoxit, oder $SiO_2$, $Al_2O_3$; $ZrO_2$ (Dichte 3,8 $g/cm^3$) als SAZ-Granulat der Firme Oeckel oder $ZrO_2$ (Dichte 5,4 $g/cm^3$) als Zirkanoxidgranulat der Firma Oeckel einsetzen. Glaskugeln sind z.B. solche aus bleihaltigem (25 % Pb) oder aus bleifreiem Glas. Als Kunststoffmahlkörper seien beispielsweise vernetzte Polyoxymethylen-Mahlkörper (Dichte 1,3 $g/cm^3$) genannt.

Die Herstellung der Dispersion nach dem erfindungsgemäßen Verfahren erfolgt in der Weise, daß das magnetische Material, das Dispergierhilfsmittel, das Lösungsmittel und das gelöste Bindemittel sowie gegebenenfalls weitere zusatzstoffe in die mit den speziellen Mahlkörpern gefüllte Behälter eingebracht werden. Das Verfahren kann in ein- oder zweistufiger Fahrweise durchgeführt werden. Beim einstufigen Dispergierverfahren wird die gesamte, in Lösungsmitteln gelöste Bindemittelmenge schon vor Anfang des Mahlvorgangs zugesetzt. Beim meist durchgeführten zweistufigen Verfahren wird lediglich ein Teil, meist ein Drittel bis zur Hälfte der gesamten Bindemittelmenge vor Beginn des Mahlvorgangs zugesetzt und die restliche Menge erst dann eingerührt, wenn die Dispersion bereits homogen ist. Zur einwandfreien Verarbeitung der Dispersion ist es angebracht, wenn die Dispersion eine Viskosität von mindestens 50 mPas (gemessen bei 25°C), insbesondere bis zu 3000 mPas aufweist.

Aufbau und Herstellung der magnetischen Aufzeichnungsträger erfolgt in bekannter Weise.

Als magnetisches Material werden bevorzugt feinteiliges stäbchenförmiges Gamma-Eisen(III)oxid mit einer durchschnittlichen Teilchengröße von 0,1 bis 2 μm und insbesondere von 0,1 bis 0,9 μm oder stäbchenförmiges Chromdioxid der gleichen Teilchenstruktur, wie beim Eisenoxid angegeben, verwendet. Weitere geeignete Materialien sind Gamma-Eisen(III)oxid mit Dotierungen von Schwermetallen, insbesondere von Kobalt und/oder Nickel. Besonders geeignet sind feinteiliges Chromdioxid, Metallpigmente bzw. Bariumferrit.

Die die magnetisierbare Schicht bildenden Bindemittel bestehen zu mindestens 50 Gew.% aus Polyurethanen. Hierfür kommen beispielsweise lösungsmittelhaltige Polyurethanelastomere in Frage, wie sie

3

z.B. in der DE-B 11 06 959 oder in der DE-B 27 53 694 beschrieben sind. Weitere geeignete Polyurethane sind in den DE-A 32 26 995, 32 27 163 und 32 27 164 offenbart. Die Polyurethane können dabei als alleinige Bindemittel oder vorzugsweise in Abmischungen mit anderen Polymeren (wie z.B. Polyvinylformale, Phenoxyharze, VC-Copolymerisate) verwendet werden. Von der zweiten Bindemittelkomponente werden vorzugsweise 10 bis 40 % zugesetzt. Bei diesen Bindemitteln ist es von besonderem Vorteil, daß ganz oder teilweise auf zusätzliche Dispergiermittel verzichtet werden kann.

Eine gegebenenfalls, je nach Bindemittelsystem und Bandeigenschaftsprofil, erforderliche Vernetzng der magnetischen Aufzeichnungsträger ist die Umsetzung der Polyurethane oder Polyurethanbindemittelgemische mit Polyisocyanaten. Für die Vernetzung kann eine Vielzahl organischer Di-, Tri-oder Polyisocyanate oder Isocyanatprepolymere bis zu einem Molgewicht von 10.000, vorzugsweise zwischen 500 und 3.000, verwendet werden. Bevorzugt sind Polyisocyanate, die mehr als 2 NCO-Gruppen pro Molekül tragen. Als besonders geeignet haben sich Polyisocyanate auf Basis von Toluylendiisocyanat, Hexamethylendiisocyanat oder Isophorondiisocyanat, die durch Polyaddition an Di- oder Triole oder durch Biuret- und Isocyanuratbildung entstehen, erwiesen. Besonders günstig ist ein Additionsprodukt von Toluylendiisocyanat an Trimethylolpropan und Diethylenglykol. Die eingesetzte Menge an Polyisocyanat ist dabei dem jeweiligen Bindemittelsystem anzupassen.

Als Lösungsmittel werden je nach eingesetztem Bindemittel Wasser, cyclische Ether, wie Tetrahydrofuran und Dioxan und cyclische Ketone, wie Cyclohexanon, verwendet. Die Polyurethane sind auch in anderen stark polaren Lösungsmitteln, wie Dimethylformamid, N-Methylpyrrolidon, Dimethylsulfoxid oder Ethylglykolacetat löslich. Ebenso ist es möglich, die genannten Lösungsmittel mit Aromaten, wie Toluol oder Xylol und Estern, wie Ethyl- oder Butylacetat, zu mischen.

Den Dispersionen aus magnetischem Material und Bindemittel werden im allgemeinen weitere Zusatzstoffe zur Verbesserung der Magnetschicht zugesetzt. Beispiele solcher Zusätze sind Fettsäuren, Polycarbonsäuren, Mono-, Di- oder Polysulfonsäuren bzw. Phosphorsäuren, deren Gemische, Ester oder Salze mit Metallen der ersten bis vierten Gruppe im Periodensystem sowie Wachse, Lecithine, Siliconöle, Fluorcarbone, außerdem Füllstoffe, wie Ruß, Graphit, Quarzmehl und/oder nicht magnetisierbares Pulver auf Silicatbasis. Üblicherweise liegen solche Zusätze insgesamt unter 10 Gew.% bezogen auf die Magnetschicht.

Die Herstellung der magnetisierbaren Schichten erfolgt in bekannter Weise. Hierzu wird die Magnetdispersion mit Hilfe üblicher Beschichtungsmaschinen, z.B. mittels eines Linealgießers, auf den nichtmagnetischen Träger aufgetragen. Als nichtmagnetischen Träger lassen sich die üblichen Trägermaterialien verwenden, insbesondere Folien aus linearen Polyestern, wie Polyethylenterephthalat, im allgemeinen in Stärken von 4 bis 200 $\mu$m und insbesondere von 6 bis 36 $\mu$m. Bevor die noch flüssige Beschichtungsmischung auf dem Träger getrocknet wird, was zweckmäßigerweise bei Temperaturen von 50 bis 100°C während 2 bis 200 s geschieht, werden die anisotropen Magnetteilchen durch die Einwirkung eines Magnetfeldes entlang der vorgesehenen Aufzeichnungsrichtung orientiert. Anschließend können die Magnetschichten auf üblichen Maschinen durch Hindurchführen zwischen geheizten und polierten Walzen, gegebenenfalls bei Anwendung von Druck und Temperaturen von 20 bis 100°C, vorzugsweise 40 bis 80°C, geglättet und verdichtet werden. Die Dicke der Magnetschicht beträgt im allgemeinen 1 bis 20 $\mu$m, vorzugsweise 2 bis 12 $\mu$m.

Die erfindungsgemäßen magnetischen Aufzeichnungsträger zeichnen sich durch verbesserte mechanische Eigenschaften unter Beibehaltung der guten Aufzeichnungs- und Wiedergabequalität aus. Hervorzuheben ist die verbesserte Kopierdämpfung, die höhere Remanenz und die kurze Dispergierzeit sowie die Vermeidung von Pegeleinbrüchen durch Fehler.

Die Erfindung sei anhand folgender Beispiele und Vergleichsversuche näher erläutert. Die in den Beispielen verwendeten Teile sind Gewichtsteile.

Polymer A

108,75 g Toluylendiisocyanat, gelöst in 108 g Tetrahydrofuran wurden auf 60°C erhitzt und mit einem Tropfen Dibutylzinndilaurat versetzt. Dazu wurden innerhalb von 2,5 Std. 150 g eines OH-gruppenhaltigen Polyesters aus Adipinsäure und Butandiol-1,4 mit einem Molekulargewicht von 1000 und 18,6 g Ethylenglykol und 4,47 g Trimethylolpropan, gelöst in 200 g Tetrahydrofuran gegeben. Nach einer Stunde wurde nochmals ein Tropfen Dibutylzinndilaurat zugegeben. Nach Erreichen eines NCO-Gehaltes von 1,78 % wurde auf 45°C abgekühlt und danach 26,25 g Diethanolamin zugesetzt. Das resultierende Produkt wies einen Feststoffgehalt von 50 %, eine OH-zahl von 91 und einen K-Wert von 24 (gemessen als 1 %ige Lösung in DMF) auf.

Polymer B

In einem beheizbaren Reaktionsgefäß von 150.000 Volumenteilen Inhalt, ausgerüstet mit Rührer und Rückflußkühler, werden 6.600 Teile eines Polyesterdiols aus Adipinsäure und 1,4-Butandiol (Molekulargewicht ca. 1.000), 778 Teile 1,4-Butandiol, 42 Teile Trimethylpropan, 4.046 Teile 4,4′-Diphenylmethylendiisocyanat, in 460.343 Teilen Tetrahydrofuran gelöst und auf ca. 55° C erwärmt. Die Komponenten werden bis zu einer Endviskosität von 20 Pas umgesetzt und anschließend mit 34.571 Teilen Tetrahydrofuran auf einen Feststoffgehalt von 12,5 % verdünnt. Gleichzeitig wird die Reaktion durch Zugabe von 100 Teilen Diethanolamin abgestoppt. Der K-Wert des gebildeten Polymeren beträgt 63 (gemessen als 1 %ige Lösung in DMF). Die OH-Zahl beträgt 12.

Beispiel 1

In einem Mahlbehälter mit einem Inhalt von 600 Volumenteilen, einem Längen-zu-Durchmesser-Verhältnis von 1,88:1, versehen mit einem Wendelrührer und gefüllt mit 420 Teilen Glaskugeln mit einem Durchmesser zwischen 0,8 und 1,2 mm, wurden 102 Teile Tetrahydrofuran, 26,3 Teile einer 50 %igen Lösung des Polyharnstoffurethans (Polymer A), 28 Teile einer 20 %igen Lösung eines Phenoxyharzes, hergestellt aus Epichlorhydrin und Bisphenol A, 100 Teile eines ferromagnetischen Chromdioxid ($H_c$ = 40,5 A/m, BET = 26,5 $m^2$/g), 2,5 Teile Zinkoleat, 0,25 Teile eines handelsüblichen Siliconöls sowie 1 Teil n-Butylstearat eingefüllt und der Ansatz 3 Stunden dispergiert. Die Dispersion wurde dann unter Druck filtriert und unmittelbar vor Auftragen auf eine 11 μm dicke Polyethylenterephthalatfolie unter Rühren mit, bezogen auf einen Teil Dispersion, 0,039 Teilen einer 50 %igen Lösung eines Triisocyanats aus 3 Mol Toluylendiisocyanat und 1 Mol Trimethylolpropan versehen. Die beschichtete Folie wurde nach Durchlaufen eines Magnetfeldes zur Ausrichtung der Magnetteilchen bei Temperaturen zwischen 50 und 80° C getrocknet und durch Hindurchführen zwischen beheizten Walzen unter Druck (60° C, Liniendruck 200 kg/cm) geglättet.

Die Messung der magnetischen Eigenschaften wurde in einem Meßfeld von 160 kA/m durchgeführt.

Nach dem Schneiden in 3,81 mm breite Bänder wurden die elektroakustischen Werte gemäß DIN 45401, 45403 und 455212 (Blatt 12) gegen das Bezugsband U 564 W geprüft. Die Meßergebnisse sind in der Tabelle 1 angegeben.

Vergleichsbeispiel 1

In einer Kugelmühle mit einem Inhalt von 600 Volumenteilen, gefüllt mit 600 Teilen Stahlkugeln mit einem Durchmesser von 4 bis 6 mm, wurde die Zusammensetzung, wie in Beispiel 1 beschrieben, dispergiert. Die Dispergierzeit betrug 48 Stunden. Die Meßergebnisse sind in Tabelle 1 zusammengefaßt.

Vergleichsbeispiel 2

In einer Rührwerksmühle, gefüllt mit Keramikkugeln mit 1 bis 1,5 mm im Durchmesser und einer Dichte von 3,8 wurde die Zusammensetzung, wie in Beispiel 1 beschrieben, innerhalb von 6 Stunden zu einer Dispersion verarbeitet und die Beschichtung entsprechend vorgenommen. Die an dem resultierenden Magnetband bestimmten Meßergebnisse sind in Tabelle 1 angegeben.

Tabelle 1

|  | Beispiel 1 | Vergleichsbeispiel | |
|---|---|---|---|
|  |  | 1 | 2 |
| Schichtdicke [$\mu$m] | 5,1 | 4,8 | 5,2 |
| remanente Magnetisierung [mT] | 185 | 168 | 175 |
| Richtfaktor | 3,2 | 2,9 | 3,0 |
| Tiefenempfindlichkeit $E_T$ 315 Hz [dB] | -0,7 | -1,1 | -1,0 |
| Höhenempfindlichkeit $E_H$ 10 kHz [dB] | -1,5 | -1,7 | -1,5 |
| Tiefenaussteuerbarkeit $A_T$ 315 Hz [dB] | 1,5 | 0,7 | 0,9 |
| Höhenaussteuerbarkeit $A_H$ 10 kHz [dB] | -1,5 | -1,6 | -1,4 |
| Kopierdämpfung [dB] | 56 | 52 | 53 |

Beispiel 2

In einem Mahlbehälter mit einem Längen-zu-Durchmesser-Verhältnis von 1,88:1 und 2000 l Rauminhalt, gefüllt mit 1.400 kg Glaskugeln eines Durchmessers von 1 bis 1,4 mm, wurden 380 kg eines ferromagnetischen Chromdioxidpigments mit einer mittleren Teilchengröße von 0,5 $\mu$m und einem Verhältnis von Länge und Dicke von 4:1 bis 9:1, einer Koerzitivfeldstärke von 40 kA/m und einer spezifischen Oberfläche von 26 $m^2$/g zusammen mit 111,6 kg einer 16,5 %igen Lösung des Polymers B, 46 kg einer 16,5 %igen Lösung eines polyvinylformals, bestehend aus 82 % Vinylformal-, 12 % Vinylacetat- und 6 % Vinylalkoholeinheiten, 5,6 kg Zinkstearat, 1,9 kg Stearylamid, 1,9 kg N-Talgfett-1,3-diamonodioleat und 339 kg eines Gemisches von gleichen Teilen Tetrahydrofuran und Dioxan, eingefüllt und 3 Stunden bei 140 U/min dispergiert. Dann wurden in der Nachphase weitere 260,5 kg des Polymers B und 107,5 kg der Polyvinylformallösung zugesetzt und weitere 15 Minuten dispergiert. Danach wurde die Dispersion aus der Mühle entnommen und unter Druck durch ein Filter von 5 $\mu$m Porenweite filtriert. Nach der Filtration wurden unter kräftigem Rühren pro kg Dispersion 17 g einer 50 %igen Lösung eines Triisocyanats aus 3 Mol Tolyilendiisocyanat und 1 Mol Trimethylolpropan zugegeben. Danach wurde die Dispersion auf eine 11,5 $\mu$m dicke Polyethylenterephthalatfolie mittels eines üblichen Linealgießers aufgetragen. Die beschichtete Folie wurde nach Durchlaufen eines Magnetfeldes zum Ausrichten der Magnetteilchen bei Temperaturen zwischen 50 und 90° C getrocknet. Nach der Trocknung wurde die Magnetschicht durch Hindurchziehen durch einen Walzenspalt bei 200 kp/cm verdichtet und geglättet, sodaß die Dicke der Magnetschicht 5 $\mu$m betrug und dann in 3,81 mm breite Bänder für Audiobänder geschnitten. Die Meßergebnisse sind in Tabelle 2 zusammengestellt.

Vergleichsbeispiel 3

In einer Kugelmühle mit einem Inhalt von 2.600 l, gefüllt mit 3.000 kg Stahlkugeln vom Durchmesser 4 bis 6 mm wurde die Zusammensetzung wie in Beispiel 2 beschrieben dispergiert. Dabei betrug die Dispergierzeit in Phase I 72 Stunden und in Phase II 24 Stunden.

Tabelle 2

| | Beispiel 2 | Vergleichsbeispiel | |
|---|---|---|---|
| | | 3 | 4 |
| Schichtdicke [$\mu$m] | 4,9 | 4,9 | 5,0 |
| remanente Magnetisierung [mT] | 180 | 160 | 165 |
| Tiefenempfindlichkeit $E_T$ | | | |
| 315 Hz [dB] | -0,9 | -1,2 | -1,1 |
| Tiefenaussteuerbarkeit $A_T$ | | | |
| 315 Hz [dB] | +1,8 | +0,9 | +1,0 |
| Kopierdämpfung [dB] | 60 | 55 | 54 |

Beispiel 3

Es wurde wie in Beispiel 2 beschrieben verfahren, aber das eingesetzte $CrO_2$ hatte eine $H_c$ von 35 A/m und eine spezifische Oberfläche von 19 m$^2$/g. Die Dispergierzeit betrug 2 Stunden in Phase I und 10 Minuten in Phase II. Die Meßergebnisse sind in Tabelle 3 angegeben.

Vergleichsbeispiel 5

Es wurde wie in Vergleichsbeispiel 3 beschrieben verfahren, jedoch hatte das eingesetzte $CrO_2$ eine $H_c$ von 35 A/m und eine spezifische Oberfläche von 19 m$^2$/g. Die Dispergierzeit betrug 70 Stunden in Phase I und 16 Stunden in Phase II. Die Meßergebnisse sind in Tabelle 3 angegeben.

Beispiel 4

Es wurde wie in Beispiel 2 beschrieben verfahren, aber das eingesetzte $CrO_2$ hatte eine $H_c$ von 48 A/m und eine spezifische Oberfläche von 29,5 m$^2$/g. Die Dispergierzeit betrug 3 Stunden in Phase I und 10 Minuten in Phase II. Die Meßergebnisse sind in Tabelle 3 angegeben.

Vergleichsbeispiel 6

Es wurde wie in Vergleichsbeispiel 3 beschrieben verfahren, jedoch hatte das eingesetzte $CrO_2$ eine $H_c$ von 48 A/m und eine spezifische Oberfläche von 29,5 m$^2$/g. Die Dispergierzeit betrug 40 Stunden in Phase I und 16 Stunden in Phase II. Die Meßergebnisse sind in Tabelle 3 angegeben.

Tabelle 3

|  | Beispiel | | Vergleichsbeispiel | |
|---|---|---|---|---|
|  | 3 | 4 | 5 | 6 |
| Schichtdicke [μm] | 4,9 | 5,1 | 4,8 | 5,2 |
| remanente Magnetisierung [mT] | 195 | 172 | 180 | 165 |
| Richtfaktor | 3,5 | 3,1 | 3,1 · | 2,7 |
| Tiefenempfindlichkeit $E_T$ 315 Hz [dB] | +0,5 | - | 0 | - |
| Höhenempfindlichkeit $E_H$ 10 kHz [dB] | - | 1,5 | - | 1,3 |
| Tiefenaussteuerbarkeit $A_T$ 315 Hz [dB] | 1,5 | - | 0,8 | - |
| Höhenaussteuerbarkeit $A_H$ 10 kHz [dB] | - | 1,6 | - | 1,4 |
| Kopierdämpfung [dB] | 59 | 58 | 54 | 52 |

Beispiel 5

Es wurde ein Zweischicht-Magnetband hergestellt indem zuerst eine Dispersion gemäß Beispiel 3 als Unterschicht und danach eine Dispersion gemäß Beispiel 4 als Oberschicht auf eine 6,8 μm dicke Trägerfolie aufgetragen wurde. Die Dicke der Unterschicht betrug 3,8 μm, die der Oberschicht 2,9 μm. Nach dem Satinieren war die Gesamtstärke 5,9 μm. Die Meßergebnisse sind in Tabelle 4 angegeben.

Vergleichsbeispiel 7

Es wurde wie in Beispiel 5 beschrieben verfahren, jedoch mit einer Dispersion gemäß Vergleichsbeispiel 5 für die Unterschicht und einer gemäß Vergleichsbeispiel 6 für die Oberschicht. Die Endstärke betrug 5,8 μm. Die Meßergebnisse sind in Tabelle 4 angegeben.

Tabelle 4

|  | Beispiel 5 | Vergleichsbeispiel 7 |
|---|---|---|
| Schichtdicke [μm] | 5,8 | 5,8 |
| remanente Magnetisierung [mT] | 177 | 170 |
| Richtfaktor | 3,3 | 2,9 |
| Tiefenempfindlichkeit $E_T$ 315 Hz [dB] | 0,3 | 0 |
| Höhenempfindlichkeit $E_H$ 10 kHz [dB] | 1,4 | 1 |
| Tiefenaussteuerbarkeit $A_T$ 315 Hz [dB] | 2,0 | 1,4 |
| Höhenaussteuerbarkeit $A_H$ 10 kHz [dB] | 1,4 | 1,4 |
| Kopierdämpfung [dB] | 57 | 52 |

Beispiel 6

In einem Mahlbehälter mit einem Längen-zu-Durchmesser-Verhältnis von 1,88:1 und mit einem Inhalt von 17,5 Liter, gefüllt mit 7,7 kg Kunststoffmahlkörpern aus vernetztem Polyoxymethylen mit einer Dichte 1,3 g/cm$^3$ und einem Durchmesser von 3 bis 4 mm, werden 3921 g (=100 Teile) eines magnetischen Gamma-Eisen(III)oxids mit einer Koerzitivfeldstärke von 26 kA/m und einer spezifischen Oberfläche von 20 m$^2$/g eingefüllt. Weiter wurden 3,09 Teile eines grobteiligen $\alpha$-Fe$_2$O$_3$ mit einer spezifischen Oberfläche von 3 g/m$^2$ und einer mittleren Teilchengröße von 0,93 $\mu$m, 9,2 Teile einer 25 %igen Lösung eines Methylpolyglykolacrylat/Methacrylsäure-Copolymerisats, 27 bis 49 Teile einer 12,5 %igen Polymerlösung (Polymer B), 4,13 Teile eines Polymers A, 5,31 Teile einer 25 %igen Lösung eines Polyvinylformales, bestehend aus 82 % Polyvinylformal, 12 % Vinylacetat und 6 % Vinylalkohol und 67,66 Teile Tetrahydrofuran eingefüllt. Das in den Polymerlösungen verwendete Lösemittel ist ebenfalls Tetrahydrofuran. Diese Mischung wurde nun 6,5 Stunden in dem beschriebenen Dispergieraggregat bei einer Dispergiertemperatur von 30 bis 35°C dispergiert. Dabei betrug der Füllgrad der Mühle 53 %, die Drehzahl 350 U/min und die Umfangsgeschwindigkeit 3,6 m/s. Nach diesen 6,5 Stunden Vordispergierzeit wurden innerhalb 5 Minuten eine Mischung bestehend aus 54,99 Teilen der Polymerlösung B, 5,0 Teile Polymerlösung A, 10,99 Teile der Polyvinylformallösung, 1,03 Teile Isostearinsäure, 0,52 Teile Butylstearat, 0,21 Teile Hydrochinon, 0,1 Teile eines handelsüblichen Siliconöls und 16,41 Teile Tetrahydrofuran während des laufenden Rührens zudosiert und weitere 10 Minuten eingearbeitet.

Nach Beendigung des Dispergiervorganges wird der Mahlbehälter unter Rühren entleert, die Magnetdispersion durch einen handelsüblichen Filter filtriert, je Kilogramm Dispersion mit 10,6 g einer 50 %igen Lösung eines Triisocyanats aus 3 Mol Toluylendiisocyanat und 1 Mol Trimethylenpropan versehen, anschließend mit einem Linealgießer auf eine Polyethylenterephthalatfolie mit der Dicke von 33 $\mu$m aufgetragen und die Magnetschicht mittels eines Kalanderwalzensystems bei 90°C und einem Liniendruck von 200 kp/cm geglättet.

Das so erhaltene Magnetband wurde auf eine Breite von 6,25 mm geschnitten und bei 38 cm/s gegen ein Bezugsband der Fa. Ampex mit einem Vacodurkopf, Kopfspalte 7 $\mu$m, vermessen.

Die Meßergebnisse sind in Tabelle 5 angegeben.

Vergleichsbeispiel 8

In einer Kugelmühle mit dem Inhalt von 30 Liter, versehen mit 8 eingebauten Stahlstiften und 40 kg Stahlkugeln mit einem Durchmesser von 4 bis 6 mm und einer Dichte von 7,6 g/cm$^3$ als Mahlkörper wurden die in Beispiel 6 angegebenen Einsatzstoffe in einer um den Faktor 1.11 größeren Gesamtmenge eingefüllt. Die Vordispergierzeit betrug dabei 48 Stunden bei einer Dispergiertemperatur von 30 bis 35°C. Anschließend wurde entsprechend Beispiel 6 die dort beschriebene Bindemittel-Additivlösung eingefüllt und weitere 24 Stunden eingearbeitet. Die Verarbeitung der Dispersion bis zu fertigen Bandstufe erfolgte gemäß Beispiel 6. Die Meßergebnisse sind in Tabelle 5 angegeben.

Tabelle 5

|  | Beispiel 6 | Vergleichsbeispiel 8 |
|---|---|---|
| Schichtdicke [$\mu$m] | 16,7 | 15,2 |
| remanente Magnetisierung [mT] | 163 | 155 |
| Koerzitivfeldstärke [kA/m] | 25,0 | 24,3 |
| Tiefenempfindlichkeit $E_T$ 315 Hz [dB] | +0,1 | +0,1 |
| Höhenempfindlichkeit $E_H$ 10 kHz [dB] | ±0 | -0,2 |
| Tiefenaussteuerbarkeit $A_T$ 315 kHz [dB] | +1,3 | +0,7 |
| Höhenaussteuerbarkeit $A_H$ 10 kHz [dB] | +0,3 | +0,3 |
| Kopierdämpfung [dB] | 53,8 | 49,5 |

**Ansprüche**

Verfahren zur Herstellung von magnetischen Aufzeichnungsträgern durch Herstellen einer Dispersion anisotroper magnetischer Materialien in der Lösung eines organischen Bindemittels unter Verwendung von Dispergierhilfsmitteln und weiteren üblichen Zusatzstoffen, schichtförmiges Auftragen der Dispersion auf ein nichtmagnetisches Trägermaterial und Verfestigen der aufgebrachten Magnetschicht, dadurch gekennzeichnet, daß die Dispersion in einem geschlossenen zylinderförmigen Mahlbehälter mit einem Verhältnis von Länge zu Durchmesser von 1,3 bis 2,5 zu 1, der mit kugelförmigen Mahlkörpern mit einem, bezogen auf das eingesetzte magnetische Material, geringerem spezifischen Gewicht und einem Durchmesser von 0,5 bis 3 mm gefüllt ist, unter Rühren mit einem Anker- oder Wendelrührer bei 50 bis 1000 Umdrehungen pro Minute hergestellt wird.